(19) Europäisches Patentamt / European Patent Office / Office européen des brevets

(11) **EP 3 866 073 A1**

(12) **EUROPEAN PATENT APPLICATION**

(43) Date of publication:
**18.08.2021** Bulletin 2021/33

(51) Int Cl.:
**G06N 10/00** (2019.01)  **G06Q 10/04** (2012.01)
**G01C 21/34** (2006.01)  **G08G 1/01** (2006.01)

(21) Application number: **20212619.9**

(22) Date of filing: **09.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2020 DE 102020201764**

(71) Applicant: **Volkswagen Aktiengesellschaft**
**38440 Wolfsburg (DE)**

(72) Inventor: **Yarkoni, Sheir**
**81543 München (DE)**

(54) **DATA PROCESSING SYSTEM FOR OPTIMIZING A LIVE DATA-PRODUCING PROCESS AND METHOD FOR OPTIMIZING THE LIVE DATA-PRODUCING PROCESS**

(57) The invention relates to a data processing system for optimizing a live data-producing process, wherein the data processing system comprises: a process data component (1) for providing the process data representing the live data-producing process, a quantum web service component (4) for generating an optimization problem to be solved by a quantum processing unit (2, 2b), wherein the quantum web service component (4) is linked to the process data component (1) for receiving the process data therefrom, wherein the optimization problem is configured for optimizing the live data-producing process based on the process data received from the process data component (1), and a feedback component (3) for feeding the solution of the optimization problem solved by the quantum processing unit (2, 2b) back to the live data-producing process, wherein the feedback component (3) is linked to the quantum web service component (4) for receiving the solution of the optimization problem solved by the quantum processing unit (2, 2b).

Fig. 1

**Description**

The invention relates to a data processing system for optimizing a live data-producing process and a method for optimizing a live data-producing process by means of the data processing system.

Cities around the world continue to grow in both size and population. Thus, traffic congestion becomes an increasingly prevalent problem. This is especially apparent during events that congregate large numbers of people for specific periods of time. For example, conferences, sporting events, and festivals can cause temporary but significant disruption to the cities' transportation systems, resulting in delays for the residents of those cities. A key issue may be that permanent transportation infrastructure, such as rail lines or roads, are costly and slow to modify given the temporary nature of these events. In light of this, the advent of smart traffic management systems offers possible improvements to existing transportation systems with minimal overhead in regards to implementation. Some requirements for such systems include the management of the mobility flows in real- or near to real-time using flexible and modular software components. At the same time detailed traffic forecasts should also be considered as well as the identification of the best scenarios to manage congestion, road closures, disruptions such as events or accidents, and accurately simulate the interaction of all vehicles, mobility modes and pedestrians. Using the data collected and the insights obtained from the predictions, cities in the urban mobility world of the future might be able to steer the demand of the whole transportation network. Building such a traffic management system that leverages large amounts of data in real-time may pose a significant challenge using contemporary technologies, necessitating the use of emerging technologies to overcome these challenges. One of the most promising candidates of such a technology is quantum computing, which has been gaining popularity among both academic and industrial circles in hopes of solving complex optimization problems in a time-relevant manner. Companies have started offering access to quantum processing units (QPUs) for experimentation in hopes of accelerating application development for the new technology. However, despite these impressive advancements in hardware, real-world applications have to be developed outside of small proof-of-concept demonstrations.

It is an object of the invention to provide a data processing system and an associated method, which are able to optimize a live data-producing process.

This object is solved by the subject-matter of the claims. In particular, this object is solved by a data processing system for optimizing a live data-producing process according to claim 1 and a method for optimizing a live data-producing process according to claim 14. Further details of the invention unfold from the other claims as well as the description and the drawings. Thereby, the features and details described in connection with the data processing system of the invention apply in connection with the method of the invention, so that regarding the disclosure of the individual aspects of the invention it is or can be referred to one another.

It is provided a traffic navigation with quantum computing as one exemplary application of a data-producing process of the present invention. A system is suggested that manages a vehicle fleet's route selection in a live setting using vehicle and traffic data optimized on a quantum processing unit. Preferably according to one aspect of the present invention, a suggested live optimization should be handled in a timely-manner, with the best possible optimization, i.e. solution, and moreover should be easily adaptable to different live data-producing processes.

The presented data processing system and the corresponding method may be applicable to a wide variety of live data-producing process. In the following, an exemplary live data-producing process in the form of a traffic navigation process for a fleet of vehicles based on traffic conditions will be presented in great detail as one preferred, however not limiting, example. The data processing system and the method associated therewith will be explained using this example. However, many other live data-producing processes may be optimized by data processing systems and the associated methods. These may be industrial processes, such as factory machinery/assembly lines, for example. These may also be logistics transportation, scheduling of vehicles and other processes, which in particular form a NP-hard problem. In computational complexity theory NP-hardness stands for non-deterministic polynomial-time hardness and is the defining property of a class of problems that are at least as hard as the hardest problems in NP, (NP = non-deterministic polynomial-time). NP-hardness is a defining property of a class of problems.

Accordingly, the presented data processing system of the invention may be in the form of a traffic navigation system. The goal of this system may be to navigate a fleet of vehicles, which may be buses, with turn-by-turn instructions so that the routes of all the vehicles can be optimized simultaneously. To accomplish this task, a live traffic data management system may be utilized to interface with the vehicles and a quantum processor. This approach is different from other services, which are offering routing of individual vehicles. Such services are not optimizing large fleets in parallel and do not use quantum computing to do so.

According to a first aspect of the invention, the object is solved by a data processing system for optimizing a live data-producing process, wherein the data processing system comprises: a process data component for providing the process data representing the live data-producing process, a quantum web service component for generating an optimization problem to be solved by a quantum processing unit, wherein the quantum web service component is linked to the process data component for receiving the process data therefrom, wherein the optimization problem is configured for optimizing the live data-producing process based on the process data received from the process data component, and a feedback component for feeding the solution of the optimization problem solved by the quantum processing unit back to the live data-producing process, wherein the feedback component is linked to the quantum web service component for receiving the solution of the optimization problem solved by the quantum processing unit.

Accordingly, the data processing system allows for optimization of a live data-producing process in a timely manner via the usage of the quantum web service component, linked to the process data component and the feedback component and by means of integrating the quantum processing unit to solve the generated optimization problem. Therein, the process data is provided by the process data component, which is then being used by the quantum web service component to generate the optimization problem, which may be specifically designed such that it can be solved by the quantum processing unit. The solution of the optimization problem is then being fed back by the feedback component to the live data-producing process, such that it may be adopted according to the solution of the optimization problem.

The data-producing processes may in particular integrate vehicles for transportation or machinery for industrial production. The vehicles may be vehicles on ground, such as cars, trucks, trains and the like. However, other vehicles such as airplanes, helicopters, drones or ships and the like can also be considered. The vehicles in focus of this present invention may be part of a fleet. The machinery is preferably a machinery in an industrial process.

Components of the data processing system, in particular the quantum web service component and the feedback component, may be in the form of one or more instructions which, when executed together or separately by one or more computers, carry out the step associated with them. Components of the data processing system, in particular the quantum web service component (together with the components it may include as will be further explained below) and the feedback component, may be alternatively referred to as parts or means of the data processing system for carrying out the step associated therewith when executed by one or more computers, in particular one or more classical computers. Respective components, in particular the quantum web service component and/or the feedback component, may be written in the same or a different programming language. For example, components may be written in Python code.

The above may apply as well to the process data component, such that this is also executable by the one or more computers to carry out the step associated with it. However, the process data component may alternatively be just the process data itself, which is provided as representing the live data-producing process. In other words, the process data components may be the pieces of information, which are provided as coming from the live data-producing process and received by the quantum web service component. As such, the process data component may be readable by one or more computers after receiving it, but it may not be executable by them such as is the case with the quantum web service component and the feedback as previously described.

The data representing the process to be optimized is provided by the process data component. In the above already mentioned exemplary case, which will further be explained with reference to the drawings and the thereto related description in great detail, the process data may be traffic conditions. These traffic conditions may be in a certain area, such as in a city, for example. These traffic conditions may then be used to navigate vehicles, such as buses, for example. The live data-producing process may accordingly be a vehicle routing process. However, the process data component may deliver process data from any other live data-producing process, such as, in particular, an industrial process. Further examples of live data-producing processes are machinery/assembly lines, logistics transportation, scheduling of vehicles and/or executable jobs, etc. The process data component may provide a direct link between the process producing the data and the quantum web service component for optimizing the live data-producing process.

The quantum web service component may also be described as a framework of the entire data processing system. It may serve as the central consolidation point of the other components, in particular the feedback component and the process data component, of the data processing system and of the quantum processing unit, which may be part of the data processing system as well. The quantum web service may be in a single container which completes an end-to-end optimization process while using the QPU. A template including all the different components within this single system may be a template of the quantum web service which can be re-implemented for any live data-processing process. The web part in the quantum web service refers to any connected system of computers (not necessarily the open internet) to allow for integration between the various components - on the one side the live process which is being modified via feedback, and on the other side the QPU. The quantum web service component may be implemented as a Flask-based web app. However, there are other alternatives (different packages in Python, or other programming languages) to Flask, which may run on a cloud service, or in other words, be cloud-based. The quantum web service component may be configured to receive requests from the other components, in particular the feedback component and/or the process data component, whenever therein stored information may be needed to be updated (based on the changing process data such as the traffic conditions) to create a new optimization problem, or whenever a new optimized response is required. The request may be sent to the quantum web service component at predefined time intervals. The quantum web service component may be configured to automate the integration of the process data component into a QUBO construction component (QUBO = quadratic unconstrained binary optimization) and a database component, as will be introduced as further possible components within the quantum web service component or framework later. This means, that the process data component is automatically integrated by means of the quantum web service component into the QUBO construction component and the database. The quantum web service component is further configured to submit requests and/or obtain responses to and/or from the quantum processing unit. The quantum web service component may be configured to either directly submit the solution of the optimization problem received from the quantum processing unit via or to the feedback component or post-process it prior to submitting it to or via the feedback component. Further, it may be provided that the solution coming back from the quantum processing unit is simply a sequence, in particular of 1s and 0s, corresponding to the (presumed) optimal value of each binary variable in the optimization problem. The quantum web services may be configured to take these sequences, and reinterpret that sequence with respect to the actual application being run. For example, from binary variable states to the turn-by-turn instructions used by vehicles in traffic. Or another example, from the binary variable states to a reordering of the paint color assignments in the paint shop optimization being described later. Such application-specific interpretation of the binary variable states from the quantum processing unit is then sent back as the feedback to the live process from the quantum web services.

The feedback component is responsible for communicating the responses of the quantum web service component back to the live data-producing process, which is being optimized. As will be explained later with reference to the already mentioned exemplary case of traffic conditions and as referenced to by the drawings, this may be in the form of an application run on a computer separate from the computer on which the quantum web service component and/or the process data component are executed. In the exemplary case referred to later, the feedback component is in the form of an Android tablet application, visualizing turn-by-turn instructions which were optimized by the quantum web service component and the quantum processing unit interacting together as per the step carried out by the quantum web service component when executed. At fixed intervals, the feedback component may be configured to submit requests to the quantum web service component for newly optimized routes. While the feedback component has been implemented as a visualization in the exemplary case, in principle this feedback component may alternatively be integrated into the process data component. For example, sensor data from an apparatus such as a stamping machine, forming the process data component, could be used to manage the pressure which is used to stamp, fed back by the feedback component. This is applicable to any process whose data can be used to adjust said process. Whether the feedback component and the process data component may be integrated into each other is dependent on the constraints presented by the live data-producing process.

The quantum web service component may comprise a QUBO construction component for generating the optimization problem as a quadratic unconstrained binary optimization problem. The QUBO construction component may be in the form of one or more instructions which, when executed together or separately by one or more computers, in particular the one or more computers executing the quantum web service component, generate the optimization problem. The quadratic unconstrained binary optimization (QUBO) problem is the form of optimization problem that may be directly executable on current quantum computing hardware (both quantum gate-model and quantum annealing). It may be provided that the optimization problem is formed using the process data in an automated integrated way. As explained previously, this means that the process data is integrated into the QUBO construction component and the database for consequently solving the optimization problem submitted to the quantum processing unit. This may be achieved in the traffic navigation example by forming the traffic flow optimization problem as using the GPS points that were used to describe the shapes of recommended routes. The quantum web service component may then automatically request recommendation of routes from the process data component.

The quantum web service component may comprise a database component for recording data from the process data component, the feedback component and/or the QUBO construction component. This database is integrated into the quantum web service component and may be used for quality assurance purposes. Also or alternatively, the database component may be included in the quantum web service component to store the QUBO prior to submitting it to the quantum processing unit. The database component may be in the form of one or more instructions which, when executed together or separately by one or more computers, in particular the one or more computers executing the quantum web service component, store or record the respective data therein.

In particular, the feedback component may comprise a monitoring component for monitoring the solution of the optimization problem fed back to the live data-producing process based on the data recorded in the database component. The monitoring component may alternatively be referred to a monitoring tool. The recorded data may also be used for further improvement of the quantum web service component. The monitoring component may be in the form of one or more instructions which, when executed together or separately by one or more computers, in particular the one or more computers executing the quantum web service component, monitor the solution of the optimization problem. For example, with traffic optimization, the monitoring component may b be a dashboard showing where all the vehicles in the fleet currently are and their projected paths (which are based on the optimization). It can also be included as an additional component of the quantum web services.

The quantum web service component, the feedback component and the QUBO construction component may be integrated into a single container. Currently all quantum computing platforms for applications are focused on only solving the optimization problem that is handed to them. Meaning, accepting an optimization problem formed already with binary (or discrete) variables and returning to the user a sequence of 1s and 0s corresponding to the presumed solution to the problem. Often the data preparation, interpretation, and re-evaluation of the solutions given by the quantum computer is done offline. This makes performing live time-critical optimization impossible. The provision in a single container provides for streamlining and connecting all the steps for solving a problem with quantum computing into a single online platform, which allows this to then be used with a live process.

The quantum web service component may comprise a hybrid component for solving the optimization problem together with the quantum computer. The hybrid component may be in the form of one or more instructions which, when executed together or separately by one or more computers, in particular the one or more computers executing the quantum web service component, contribute to solve the optimization problem in communication with and support by the quantum computer. Accordingly, instead of sole usage of the quantum processing unit, i.e. a sole quantum algorithm to be solved, a quantum/classical hybrid algorithm may be used along the hybrid component. This means, that instead of submitting the optimization problem directly, e.g. via an application programming interface (API), to the quantum processing unit, there may be an interaction between the hybrid component, running one or more classical computers, by means of which the quantum web service component is executed, and the quantum processing unit. The hybrid component on the classical computer executing the quantum web service may communicate with the quantum processing unit as part of an inner loop to perform a specific task that improves the algorithm's ability to converge to optimal solutions. The advantage of this approach is that the use of the quantum processing unit in the algorithm can be tailored to the strength of the quantum processing unit, making better use of a limited resource. However, run-time is sacrificed in waiting for the response of the quantum processing unit to continue the iterative classical procedure.

The quantum web service component and the feedback component may be configured as interchangeable modules. The modular implementation of these components allows that only specific components need to be re-implemented for different live data-producing processes being optimized using the data processing system, as opposed to the entire system.

The quantum web service component and the feedback component may be configured for being executed on at least one classical computer. The quantum web service component and the feedback component may be executed on different classical computers. The particular setup of the configuration for execution on different computers may be chosen according to the particular live data-producing process.

Accordingly, the data processing system may comprise at least one classical computer for executing the components of the data processing system.

The data processing system may further comprise the quantum processing unit for solving the optimization problem generated by the quantum web service component.

The data processing system may be at least partially cloud-based. In particular, at least the quantum processing unit, when included in the data processing system, may be cloud-based due to its high costs and limited availability. Further, at least the quantum web service component among the components of the data processing system may be cloud-based. This allows for convenient linkage to the other components, namely the process data component and the feedback component and wide applicability of the provided data processing system.

One or more apparatuses may provide the process data component and/or the feedback component. The one or more apparatuses may be part of the data processing system. The one or more apparatuses accordingly provide the process data to the quantum web service component and receive the solution of the optimization problem based on that process data or, in other words, optimized process data. As previously described, the apparatus may be a stamping machine, for example. Of course, the apparatus may be any other type of industrial machine or multiple of such, such as manufacturing lines. The one or more apparatuses may in particular be vehicles or one or more devices included in the one or more vehicles. The one or more devices may be navigation systems, computers, tablet devices, smartphones or similar, for example.

According to a second aspect of the invention, the object is solved by a method for optimizing a live data-producing process by means of the data processing system according to any of the previous claims, the method comprising: providing the process data representing the live data-producing process, generating the optimization problem to be solved by the quantum processing unit based on the provided process data, solving the optimization problem by means of the quantum processing unit, and feeding the solution of the optimization problem solved by the quantum processing unit back to the live data-producing process for optimization thereof.

Accordingly, the process data component may be used for the provision of the process data, the quantum web service component may be used for the generation of the optimization problem and the feedback component may be used for feeding back the solution to the live data-producing process. Thereby, the same advantages may be achieved by means of the method of the invention as previously described with reference to the data processing system of the invention.

The live data-producing process may be a traffic navigation process of a fleet of vehicles. Therein, the process data may be traffic data. Accordingly, the process data component may be traffic data component. The traffic data may be provided by means of an API. This can be provided by different service providers. The feedback component may be formed by an app executable on a computer, in particular navigation system of a vehicle, stand-alone tablet device or smartphone inside of a vehicle or as part of the vehicle, for example. The feedback component may have sub-components, namely a back-end sub-component, which may be designed as a back-end of the app, and a front-end sub-component, namely the front-end of the app. The front-end sub-component of the feedback component may be a visualization of the solution of the optimization problem, which may be shown on the screen or connected to the computer. This visualization may be in the form of turn-by-turn instructions, for example. The back-end sub-component may handle the receiving of the solutions of the optimization problem and request new optimization problems to be solved from the quantum web service component.

Especially fleets of vehicles in general or autonomous cars, buses, shuttles or the like benefit from the present invention and its preferred embodiments. However, in principle, any dedicated ensemble of machines or vehicles with common data that compete for resources and need to be optimized in parallel can make use of the presented data processing system. This includes printing/stamping machines, parallel assembly lines, or any such industrial process which would be optimized with access to live data.

Further advantages, features and applications of the present invention are provided in the following detailed description and the appended figures, wherein:

Fig. 1 schematically illustrates a first embodiment of a data processing system;
Fig. 2 schematically illustrates a second embodiment of a data processing system;
Fig. 3 schematically illustrates exemplary matrices for a traffic navigation process;
Fig. 4 schematically illustrates exemplary selection of bus lines for the traffic navigation process; and
Fig. 5 schematically illustrates an exemplary diagram detailing the data processing system usable in the traffic navigation process.

Various example embodiments are described more fully with reference to the accompanying drawings in which some example embodiments are illustrated.

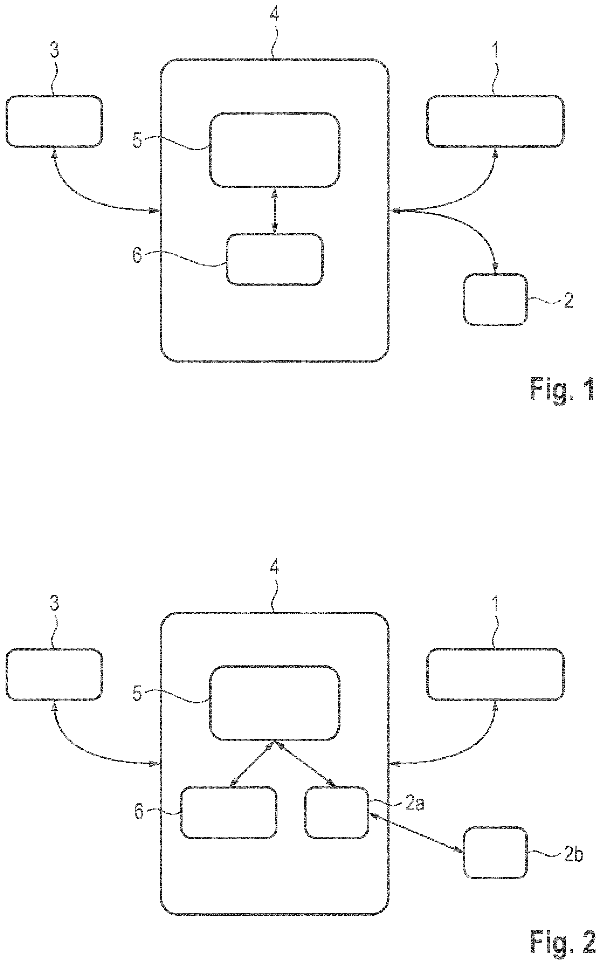

Fig. 1 shows an exemplary first embodiment of the data processing system. The data processing system comprises a quantum web service component 4 including a QUBO construction component 5 and a database component 6. The data processing system further includes a classical computer, on which the quantum web service component 4 is being executed. The data processing system further includes a process data component 1 and a feedback component 3 respectively directly linked to the quantum web service component 4 and linked to each other via the quantum web service component 4. Alternatively, depending on the restraints presented by the particular live data-producing process to be optimized by the data processing system, the process data component 1 and the feedback component 3 may be integrated into each other, in particular executed by the same classical computer, which may be a different one than the one on which the quantum web service component 4 is executed.

The quantum web service component 4 is a cloud-based component, which may be linked via HTTP or HTTPS to the feedback component 3 and the process data component 1. Further to the classical computers of the quantum web service component 4 and the feedback component 3 and the process data component 1, the data processing system includes or at least makes use of a quantum processing unit 2, which is directly linked via HTTP or HTTPS to the quantum web service component 4.

Upon providing the process data component 1, which is process data from the live data-producing process to be optimized, at the quantum web service component 4, this process data is automatically integrated into the QUBO construction component 5 and the database component 6 through execution of the quantum web service component 4 on the classical computer in the cloud. A QUBO problem is generated and transmitted via HTTP or HTTPS to the quantum processing unit 2. The quantum processing unit 2 solves the QUBO problem and transmits its solution to the quantum web service component 4, which may directly transmit it to the feedback component 3 or after postprocessing it to transmit it to the feedback component 3 for optimization of the live data-producing process.

In one example of the live data-producing process different from the one discussed previously, namely the traffic navigation process, a vehicle painting process in a paint shop at the site of the manufacture of the vehicles may be optimized by means of the data processing system and is further explained as a possible application of the data processing system.

The painting of the vehicle body is one of many consecutively performed steps in the manufacturing and assembly line of the vehicle. Usually, in the paint shop, the cars are painted according to a "first come first serve" principle. Obviously, it would be preferable, to paint a large number of vehicle bodies of a certain color first, then switch the setup, e.g. color and tools, in the paint shop to a different color, paint a further large number of vehicle bodies in a different color and so on, to reduce the costs and time needed to switch the setup of the paint shop for painting different colors. However, there are heavy regulations with over 400 rules or restrictions, which must be complied with prior to switch the order of vehicles entering the paint shop. Such restrictions form in particular due to the consequent assembly of the vehicle with the huge amount of custom options available to the customers. One example of such a rule is that in the assembly line passing the paint shop, at least three cars without sunroof must be assembled after a car with sunroof due to the required time for installing the sunroof, such that the workers may finish the work in the required time and the assembly does not need to stop. The problem underlying the vehicle painting process can be described as NP-hard.

In the case of the vehicle painting process as the live data-producing process, the order of the vehicles together with their custom options and the constraints formed by the rules or restrictions may be provided as the process data component 1. Consequently, these are automatically integrated in the quantum web service component 4, for which a QUBO problem is constructed by the QUBO construction component 5 and transmitted to the quantum processing unit 2 for solving thereof. The solution of the problem is then being fed back to the live data-producing process by the feedback component 3, such that the order of vehicles is consequently optimized by the paint shop to reduce the number of setup switches in the paint shop.

Because sometimes painting errors occur, where a repainting of a vehicle body is necessary, some vehicles need to go through the paint shop a second time. This means that the live data-producing process needs to be re-optimized. Of course, re-optimization may be needed also in other cases. In such cases or at predefined intervals, the feedback component 3 may request the quantum web service component 4 to re-optimize the live data-producing process based on the new process data including the vehicle to be repainted.

An improvement that could be made in the data processing system of Fig. 1 could be to split up the operation of the quantum processing unit 2 as shown in Fig. 2. The difference here is that the quantum web service component 4 includes a hybrid component 2a interacting with the quantum processing unit 2, now referred to as 2b, to solve a custom hybrid quantum/classical algorithm tailored to the problem. This could be allowed to run asynchronously from within the quantum web service component 4, reducing overhead times and eliminating the need for the QUBO construction component 5 to submit an external request to outside the quantum web service component 4. The hybrid component 2a would still need to submit an external request to the quantum processor unit 2b, but this may be implemented so it does not interfere with the feedback component 3 and the process data component 1.

In the following, a particular data-producing process in the form of the already described traffic navigation process will be described as optimized by the presented data processing system at a conference (or any other event) in a city (or a larger area), which is to be seen as merely one example, for which the data processing system may be used. The high influx of people into a city during a conference causes significant stress on the city's transit services for the duration of the conference. A two-phase solution may be implemented to provide quantum computing-based traffic optimization: the first phase may use data science techniques to analyze the movement of people from previous conferences to build temporary new bus routes throughout the city. The second phase may use a custom Android navigation app installed in the buses operated by the bus operator as a feedback component 3, powered by the quantum web service component 4 that connects to a live traffic data component 1 and a quantum processing unit 2 to optimize the buses' routes in real-time.

In the following, the data processing system as a connected traffic management system that may be operated during such conference in a city, is described. Two main problems are specifically addressed and solved. The first problem is: How do we design customized bus routes to avoid traffic congestion during big events? The second problem is: How would one build a real-time production application using a quantum computer to manage such a traffic system?

In this example, it is assumed that the traffic navigation service (in the following referred to as service) is live for a period of multiple days, navigating a certain number of buses operated by the transit authorities of the city, in which the conference takes place, between the conference center of that conference and the city center of the city. The buses may be navigated by a custom Android application, which may be the feedback component 3 and may dependent upon the quantum processing unit 2 performing the route optimization task. The buses may follow the routes as assigned by the quantum processing unit 2 in the form of turn-by-turn instructions.

In the following it is explained, how the bus routes may be extracted from movement data. In order to understand how to improve the overall traffic conditions during the conference in the city, a comprehensive movement stream analysis may be performed. The main goal of the analysis is to provide recommendations to the public transport operator of the city upon fleet allocation, capacity, and scheduling, to reinforce their existing network during the conference in the form of a new mobility service. The movement stream analysis may be divided into two main phases: the first phase may include the setup of the transport model of the city. This may be based on a four-step transport modelling approach: trip generation, trip distribution, modal split, and traffic assignment. The second phase may include deriving bus stop locations, bus routes, and schedules for the Quantum Shuttle based on the given demand for mobility in the transport model.

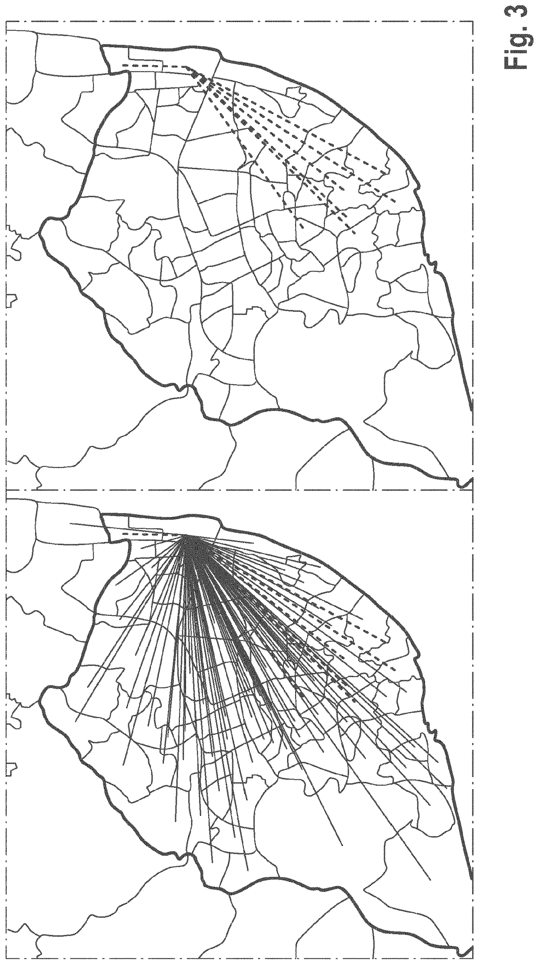

The goal of the first phase may be to obtain origin/destination (OD) matrices, detailing the volume of movement streams from the conference venue to different zones of the city on an hourly basis. The results from the analysis may show a total of a certain number of OD matrices in a study area of a certain number of zones throughout the exemplary city, as shown in Fig. 3. Fig. 3 merely provides an example for a possible case in a city with a specific conference. The data which may serve as an input into the traffic model may include demographic census data, mobility behavior from surveys, city traffic counts, floating car data, mode of choice and network models from the city, for both dates within and outside the conference time frame.

To better understand the nature of the traffic conditions, movement data may be segmented according to the trip purpose, such as: family, airport, hotels, and others. Data may be segmented by hour of day, using the peak day of visitors for the conference as a reference. The OD matrices may also differentiate the mode of choice, either travel by public transport or private transport. The second phase of the movement analysis may derive the exact coordinates of new or existing bus stops to be included in the new service and reinforce the existing public transport network. For this, locations of the biggest traffic jams caused by conference traffic may be analyzed. By comparing the transport model of days within and outside of the conference time frame, movement streams leading into those traffic jams may be identified as the source, and traced back to their zones of origin. Only movement streams with more than 2000 trips per day (Fig. 3, right) may be included in this analysis. All trip purposes other than family trips and homes may be included in the OD matrices, to yield the likeliest representation of potential users of the service. As a result, a certain number of high demand zones towards and from the conference may be identified. Trips per hour may be extracted for each of the high demand zones, separated into public transport and private transport modes. Of the certain number of original high demand zones, only zones with more than 250 trips per hour, for example, may be selected as candidates for covering the target passenger base by the fleet. Four zones, for example, may be finally selected to cover the morning and evening demand.

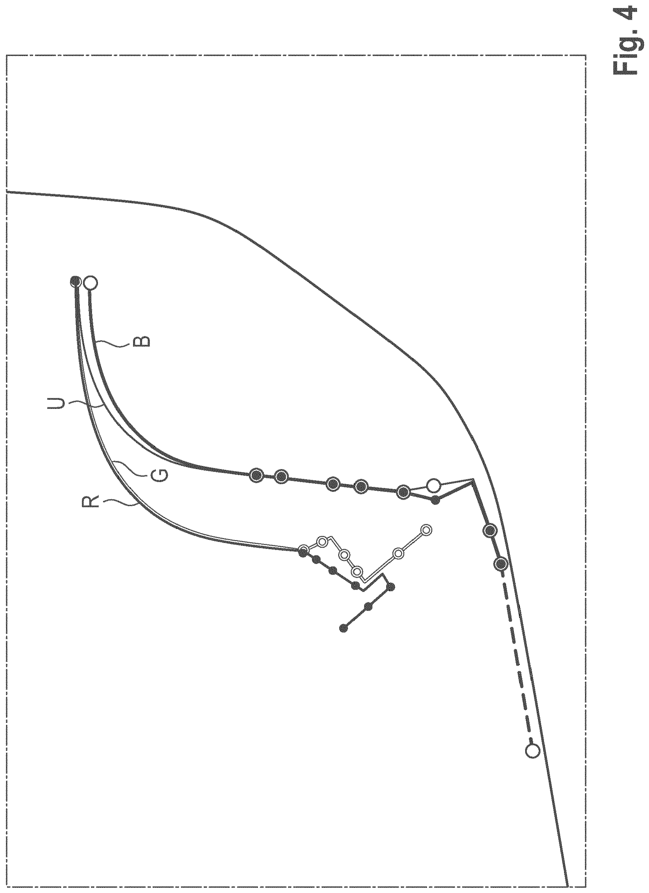

For each of the zones, a geospatial analysis correlating the points-of-interest (such as hotels and private room rentals) with the existing public transport network in the city may be conducted and discussed with the public transport operator. The results may suggest that the pick-up and drop-off bus stops need to be no more than 2-5 minutes walking distance for the service to be attractive to customers. To accomplish this, several express bus lines may be proposed to serve the demand from the selected zones to the conference. In this exemplary case of city, four express bus lines may be proposed: an R line, a G line, and an U line, with a total of a certain number of bus stops, which again, is merely an exemplary number, in this case for the amount of bus stops. One express line may be dedicated for the return traffic from the conference venue to the city center (the B line). A schematic of the map usable on display at the conference is shown in Fig. 4. The bus lines shown in the left portion of the map may operate only during the morning period, whereas the bus lines shown in the right portion of the map may operate both in the morning and evening. Bus departures may be scheduled every 30 minutes for all lines, for example. For the morning, two lines (R and G) may cover the demand in the northern part of the city center, picking up visitors along 7 dedicated bus stops and meeting at the farthest point of the line. From this point to the conference venue, the visitors may no longer be picked up and the bus may be navigated solely using the described service. For the bus lines in the right portion of the map, the portion of the routes between the conference station and another station may be navigated using the service.

To determine the schedules of the fleet, the peak traffic demand in the selected zones from 09:00 - 10:00 and 10:00 - 11:00 may be identified, for example. This may amount to a certain number of trips towards the conference. For the evening demand (the return trips to the city center), peak hours may be identified from 16:00 - 17:00 (4:00 p.m. to 5 p.m.) and 17:00 - 18:00 (5:00 p.m. to 6 p.m.), for example, with a certain number of trips leaving the conference. The results may highlight that the zone with the lowest public transport usage may have 45% of total trips being public transit, for example. This may indicate that the modal split in this zone can be heavily improved relative to other zones with higher average public transit usage (65% and above, for example). Given the performed analysis for each of the four selected zones, and considering the estimated demand in both the morning and evening, a total of a certain number of buses may be proposed as a recommendation for the fleet volume.

In the following, details on how the cloud computing-based traffic navigation system may be designed and implemented are explained.

Building a functioning web service that uses a cloud-based quantum processor while providing meaningful navigation optimization imposes a specific set of both conditions and constraints. By setting the goal of navigating buses in real-time, it is required that a live connection between three different services be consolidated simultaneously - the navigation app (in this case exemplary run on Android) as the feedback component 3 (in the following just referred to as app), the traffic data as the process data component 1, and the quantum optimization performed by the quantum processing unit 2. The content and scope of each component is first described, then it is explained how they may be combined in the final data processing system by means of the quantum web service component 4. For brevity, from here on it is referred to the cloud-based part of the service as the quantum web service component 4.

Development of the Android app may be divided into two parts: the front-end (visualization for the bus drivers) and the back-end (server-side communication to the quantum web service component 4). It is explained separately how the two parts may be implemented, then consolidated, to satisfy the demands of the navigation.

The front-end of the bus navigation may be comprised of an application (in this exemplary case Android), visualizing the turn-by-turn navigation, operated on an Android tablet in this example. However, instead of an Android application, any other type of application executable on a computer may be provided. The main role of the app may be to plot the custom routes provided by the quantum web service component 4 and to initiate turn-by-turn navigation with voice instructions. Additional functionality may be built into the app to allow bus drivers to start/stop the current and next trips they are meant to follow, as well as to track the current location of the buses in the fleet to allow for the optimization of the route selection. Trips may also be ended automatically once a vehicle is within 15 meters of its defined destination.

The visualization portion of the app may be built using an SDK (Software Development Kit) to render the custom routes obtained by the quantum web service component 4.

In order to make the app useful for live navigation, multiple issues may be needed to be overcome in its implementation. Most importantly, the current location of the moving buses may be needed to be reconciled with the custom routes received from the quantum web service component. Thus, if the vehicle may have already passed the assumed starting point returned by the quantum web service component 4, the app may form U-turns and loops in order to catch the missed point, potentially making the app unusable in a live setting. To solve this, the app may use a projected future location for the vehicle instead of the live location when broadcasting to the route optimization. However, it may be necessary to ensure the future location is a valid GPS point along the route. To do this, an algorithm may be developed using the SDK to decide the future location considering properties such as geographic line, vehicle movement, bearing angles, etc. While this solution allows to project the future location accurately, the live location of the vehicle may still be required by the quantum web service component 4 for monitoring and data collection purposes. Therefore, both locations, live and projected, may be stored locally on the Android devices, and send to the back-end component periodically (explained in the next section).

In the event that device connectivity is lost during the trip, the active trip may be manually ended (purposefully or accidentally), or the quantum web service component 4 experiences errors, it may be vital for the Android app to maintain valid turn-by-turn directions for the bus to reach its destination. To accomplish this, a fallback mechanism may be implemented: a static route may be loaded into every device for all the trips (which may be overwritten by the custom routing of the quantum web service) to be used in the event of no live route optimization, and a cache may be used to maintain the route provided by the quantum web service component 4 in the event of lost connection. Thus, even if a bus becomes isolated, it may still complete its trip.

The back-end of the navigation app may act as an interface between the Android app and the quantum web service component 4. The back-end may be used to send the collected data of all the vehicles of the fleet at fixed time intervals to quantum web service component 4 over HTTP or HTTPS. Responses from the quantum web service component 4 may also be distributed by the back-end to their respective vehicles.

An important role of the back-end may be to keep the data flow in sync between the vehicles and the quantum web service component 4, as both synchronous and asynchronous communication protocols may be used. The quantum web service component 4 may be designed in such a way that it accepts a single consolidated request consisting of the location information for all the vehicles, both live and projected. It may be the role of the back-end software to consolidate all the locations it receives from all the vehicle devices at different frequencies, and send it to the quantum web service component 4. This means that the back-end may maintain an index of each vehicle's request and response, to ensure data integrity. Because of the different requirements of the live location tracking and the projected locations, the requests submitted by the back-end to the quantum web service component 4 may be separated between two destinations on the quantum web service component 4: /update and /optimize. The /update request may submit the live location of each vehicle to the quantum web service component 4 on a 30 second interval, while the projected location (and in return the customized route returned) may submit to the /optimize URL at an interval of 120 seconds. The intervals however may alternatively be chosen anywhere in the range of 5 seconds to 300 seconds, for example.

Lastly, the back-end may also be responsible for determining the difference between two subsequent optimized routes for the same vehicle. The optimized route may be send to the vehicles' app only when the optimized route is changed. Therefore, every time a route is changed, a matching of the new coordinates may be performed, and redundant GPS coordinates may be removed (for example, new sets of coordinates describing the same route as before). This step may be critical in the performance and user experience perspective: adjusting the routes on the Android devices may delay instructions and cause ambiguity for the bus drivers. Additionally, performing these adjustments on the back-end may reduce the risk of the front-end crashing due to unforeseen errors.

At the start of every trip and at regular time intervals until completion of each trip, multiple candidate routes may be generated between the current location of each bus in the system to its assigned destination. These routes may need to be traffic-aware to reflect the current conditions of the city road network. To accomplish this, a live traffic services provider may be used. Using this provider's routing API, it may be possible to generate between 3 - 5 traffic-aware candidate routes per vehicle at every optimization step with minimal overhead.

It is important to note that since the vehicles may be operated in parallel in different parts of the city, different routes may be likely to be suggested for each vehicle in the system at every optimization step. Often, however, subsets of these suggested routes may overlap, necessitating the optimization of the routes' selection to minimize congestion. In this scenario, identical GPS points may be returned from the routing API describing the shape of the overlapping portion of the routes. Therefore, the GPS points may be used directly to form the optimization problem. The QUBO formulation of the objective function is then:

$$Obj = \sum_{p \in P} cost(p) + \lambda \sum_i \left( \sum_j q_{ij} - 1 \right)^2$$

where $q_{ij}$ are the binary decision variables associated with vehicle i taking route j, P is the set of all GPS points that overlap in the suggested routes, A is a scaling factor ensuring only one route is selected per vehicle in the QUBO minimum, and cost(p) is the cost function associated with each GPS point p in P:

$$cost(p) = \sum_{q_{ij} \in B(p)} (q_{ij})^2$$

Here, $q_{ij}$ is as before, and B(p) is the set of all binary variables that contain the GPS point p. Thus, the final selection of routes in the optimum of the QUBO represents the routes that minimally overlap with all other selected routes.

Quadratic unconstrained binary optimization (QUBO) problems are defined on binary variables {0, 1}, and are equivalent to minimizing Ising Hamiltonians, which use spin variables {-1, 1}. This is NP-hard in the worst case, and such problems are often solved using heuristic algorithms. Cutting edge quantum computing architectures, such as gate model and annealing QPUs, can represent Ising Hamiltonians natively, making quantum algorithms an attractive tool for heuristic optimization of hard problems.

For the proposed live traffic navigation, the quantum optimization algorithm must meet specific conditions. Because of the time-sensitive nature of traffic navigation, the proposed solution may need to respond with valid solutions to the optimization problem quickly. The algorithm also may need to handle varying sizes and complexity of the traffic flow optimization (TFO) problem, as it may need to optimize the route selections of the vehicles automatically at regular intervals. Due to these real-world conditions, the QPU and a respective software stack may be used to deploy the presented solution. Three different methods of using quantum annealing to solve the traffic flow optimization problem formulated above may be proposed. In the following, each method, how it may be implemented, and an evaluation of the methods based on the navigation application are explained.

One approach to solving QUBOs with a quantum annealer is by minor embedding the graph directly to the topology of the QPU. Some QPUs have a limited-connectivity hardware graph. In order to solve arbitrarily-structured QUBO problems, multiple physical qubits can be chained together using additional constraints to represent logical variables. The benefit of this approach is speed - even with the overhead of transforming the TFO problem to a QPU-compatible graph, using the QPU at the fastest annealing time (1µs to obtain a single sample) still may return valid solutions to the problem. This process can be performed on the order of tens or hundreds of milliseconds. However, there may be two drawbacks to this method. Firstly, by employing extra physical qubits to describe the problem (and by exclusively using the QPU directly), the size of problems that can be solved may be restricted to a maximum number of qubits. This restriction may prevent fully automating the system for large numbers of vehicles or routes. Secondly, qubits are analog devices, and therefore have a limit on the precision with which a problem can be described before data becomes indistinguishable from background noise. This means that the quality of the solutions obtained by the QPU may degrade as the problem size increases, again possibly preventing obtaining useful solutions to the TFO problem with many variables. The proposed method may at least be suitable for up to 10 vehicles with 5 routes each.

One method of circumventing the issues of direct embedding is to build a hybrid quantum-classical algorithm. Hybrid algorithms may be implemented on classical computers, and may use a QPU as part of an inner loop to perform a specific task that improves the algorithm's ability to converge to optimal solutions. The advantage of this approach is that the use of the QPU in the algorithm can be tailored to the QPU's strength, making better use of a limited resource. However, run-time may be sacrificed in waiting for the QPU's response to continue the iterative classical procedure. As mentioned previously, minor embedding dense problems may significantly degrade the QPUs performance, which in this case still came at the cost of waiting for the QPU responses. In light of this, a custom hybrid algorithm to make better use of the QPU in a timely manner may be developed. This may allow an increase of the throughput of sub-problems to the QPU. However, due to time constraints, it may be difficult to parallelize the implementation so that it could continually run independent of the request/response portion of the quantum web service component 4. Therefore, the hybrid algorithm may be restarted every time a new route optimization is requested. This may incur significant overhead time, delaying the response for live use.

As part of the QPUs online cloud service, in addition to direct QPU access, a state-of-the-art hybrid algorithm may also be offered. This service, named the Hybrid Solver Service (HSS), is tailored to solve large, arbitrarily structured QUBOs with up to 10,000 variables. The disadvantage of this method is that it is not possible to control the exact method with which the QPU is used, instead the HSS is used as an optimization black-box. Access to the HSS may be provided through the same API as the QPU, which allows to integrate it in to the quantum web service component 4 executed on the classical computer in a modular way. By offloading the overhead associated with starting the hybrid algorithm to the D-Wave remote server, it may be possible to reduce the response time significantly compared to the other approaches. That the HSS can solve problems significantly larger than the QPU also allows to seamlessly scale up the quantum web service component 4 to handle hundreds of vehicles with tens of route options for future applications. The HSS may provide good compromise of speed, accessibility, and performance.

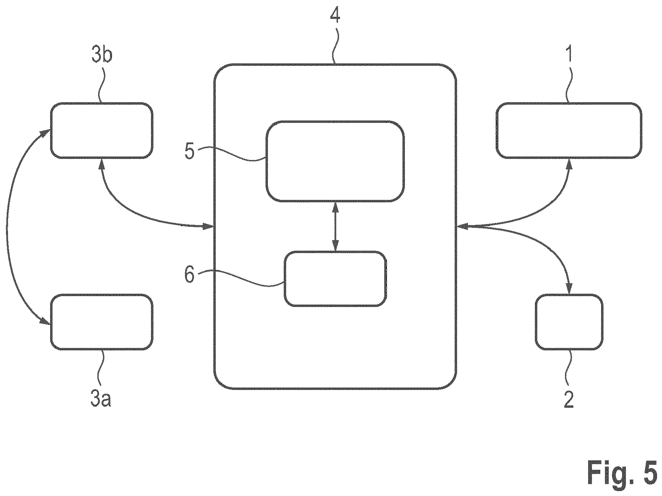

An overview of the data processing system with its components and how they communicate with each other as may be used for the navigation service is shown in Fig. 5.

Sub-component 3a, the front-end Android tablet application, provides visual turn-by-turn navigation with vocal instructions to the bus fleet and their drivers. The vehicle locations may be send every 30 seconds to back-end sub-component 3b. However, the intervals for sending the vehicle locations may be in the range of anywhere between 5 seconds to 120 seconds, in particular 15 seconds to 60 seconds, for example.

Sub-component 3b is the Android app back-end, and may submit the POST requests to the quantum web service component 4. Sub-component 3b may be any other type of back-end, in particular any other app back-end, such as an app running on iOS, MacOS, Windows, Linux or similar. Sub-component 3b may consolidate the locations of the vehicles and submit them to the quantum web service component 4 via the /update URL every 30 seconds or within the interval range mentioned above. This component also may form the POST request to the quantum web service component 4 /optimize URL for the route optimization, interpret the response, and send the new routes back to the sub-component 3a.

Accordingly, the sub-components 3a and 3b may form together the feedback component 3 as previously explained with reference to Figs. 1 and 2. The sub-component 3a may be referred to as a front-end feedback component 3a and the sub-component 3b may be referred to as a back-end feedback component 3b.

The quantum web service component 4 may be the framework hosted on a cloud service provider (exposed using Flask), which may serve as the central consolidation point of the other components 1, 2, 3b. In the event of an /update POST request from sub-component 3b, the quantum web service component 4 may update component 6, which forms a database. In this particular case, the component 6 has a Python module wrapped around a MongoDB database; accessing and writing data from the quantum web service component 4 to the database is performed by this component 6. In the event of an /optimize POST request from sub-component 3b, the component 1, which generally forms the process data component 1, is accessed to request the suggest routes. The accessed data may be passed to component 5, in this particular case the QUBO construction component 5, to construct the traffic flow optimization QUBO problem, which may then be stored in the database component 6. The QUBO construction component 5 in this case may be the Python module that implemented the traffic flow optimization QUBO formulation previously described. The QUBO may be submitted to the quantum processing unit 2 via HTTP or HTTPS. In this exemplary case, the QUBO may be submitted to HSS on the quantum processing unit 2 via HTTPS. However, any other QPU-based service may be used instead of the HSS. The quantum web service component 4 then interprets the results of the optimization, stores them via the database component 6, and pushes the selected routes back to the sub-component 3b.

As mentioned previously, it may be necessary to both track the live positions of the vehicles, as well as specify a new "origin" per vehicle for every optimization request. In order to ensure that the locations used for optimization do not result in infeasible or unrealistic route selections, a projected location may be used for each vehicle. Specifically, given a route in the form of a sequence of GPS coordinates, a GPS point further along the route may be passed as the origin for the next optimization step. This position may also be used to track the locations of the vehicles. However, this may be problematic, since the update frequency may be faster than the change in the projected location, making it difficult to track the locations of the vehicles. To solve this, the live location and the location used to determine the new routes may be separated: location updates may be send to a different URL independently from the optimization requests every 30 seconds, with the live locations now stored serverside after every update.

The route optimization may occur every 60 seconds, for example. However, it is appreciated, that this frequency may be too fast, resulting in different routes being assigned to the vehicles every time an optimization problem is solved. Furthermore, there may be the problem, given a new route A after the optimization, a different new route B may sometimes be suggested while navigating to route A. This might make navigating buses with real passengers impractical. Such phenomenon's may occur due to two main reasons: Firstly, quantum annealing is a heuristic optimization algorithm, meaning a QPU implementing such an algorithm is not guaranteed to return the same solution every time it is queried. Secondly, because of the frequent optimization requests, the vehicles' projected positions often stays the same between optimization requests, causing the same optimization problem to be formulated in successive requests. An optimization interval of 120 seconds between optimization requests is suggested to resolve the issue, allowing for sufficient time to change the projected locations of the vehicles.

The city may have a network of narrow one-way streets exists near the conference center, which may need to be avoided. Further, other impractical restrictions may be imposed by the network onto the fleet. To solve this problem, whenever routes are suggested that utilized roads in these networks, the GPS locations may be recorded and added to a list stored on the quantum web service component 4 server. This list (in the form of bounding boxes of areas to avoid on a map) may be submitted as part of the routing API request, which may return only routes that avoided those areas. This list of forbidden areas may be actively updated in the city based on feedback from the bus drivers, resulting in only valid routes being generated by the end of the final testing phase.

The number of candidate routes that can be requested from the routing API per vehicle is an unconstrained parameter client-side. By default a certain number of candidate routes per vehicle may be requested. However, in some cases one or more of the routes suggested may be significantly slower than the fastest route suggested, possibly resulting in extremely slow routes sometimes being suggested. The reason for these slow routes being selected may be due to the way the cost functions are formulated in the optimization problem. The goal is to reduce the amount of congestion caused by the vehicles, defined by the number of streets/GPS points shared between candidate routes across all vehicles. The slower routes suggested by the routing API may be often significantly longer than the fastest suggested route, and thus may have lower overlap with the faster routes, causing some of the vehicles to be assigned to the slower routes. To circumvent this, a time filter may be implemented to assure only reasonably fast routes are considered as valid candidates. A value of 2 minutes, for example, may provide the best trade-off between the number of routes selected and the routes' relative expected travel times. By allowing the slowest suggested route to be at most 2 minutes slower than the fastest route suggested, it may be possible to maintain the certain number of valid candidates per vehicle for the majority of the trips.

To quantify the customization of the routes used by the vehicles, the dissimilarity between them may be measured. Specifically, the overlap between the location histories of vehicles being navigated concurrently by the system may be measured. The overlap may be defined as the fraction of GPS points in a vehicle's location history that coincided with another vehicle's route (that is being navigated at the same time), within a distance of 50 meters. The overlap metric is therefore defined to lie between [0, 1]. Distance (d) between GPS points may be calculated using the haversine formula:

$$d = 2r \arcsin\left(\sqrt{sin^2\left(\frac{\varphi_2 - \varphi_1}{2}\right) + \cos\varphi_1 \cos\varphi_2\, sin^2\left(\frac{\lambda_2 - \lambda_1}{2}\right)}\right)$$

where $\phi_1$, $\phi_2$ are latitudes, $\lambda_1$, $\lambda_2$ are longitudes, and r = 6,371,009 meters is the Earth's radius.

Because the system re-optimizes the distribution of routes at most every 120 seconds, for example, each vehicle's recorded trip is a sum of successive routes suggested by the optimization. It is important to note that the suggested routes may be traffic-aware and therefore already circumvent the existing traffic congestion in the city. Thus, by minimizing the overlap between the vehicles, it is possible to minimize the additional traffic congestion caused by the fleet.

Based on the above presented data processing system, a custom mobility service for a conference using a quantum processor is proposed. The modular implementation of the quantum web service component 4 into the system allows for communication with a live quantum processor in a timely fashion, making it suitable for this particular traffic optimization use-case as well as other cases. The system can handle live optimization of other, non-traffic related processes provided modifications to the QUBO construction and live data components. This is of particular relevance, since many production processes have similar constraints to the those presented in this particular service, making the system highly adaptable to other scenarios.

Accordingly, while example embodiments are capable of various modifications and alternative forms, embodiments thereof are shown by way of example in the Figures and are herein described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the Figures.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

It should be appreciated by those skilled in the art that any diagrams herein represent conceptual views of embodiments embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

While above several exemplary embodiments of the present invention have been described, it has to be noted that a great number of variation thereto exists. Furthermore, it is appreciated that the described exemplary embodiments only illustrate non-limiting examples of how the present invention can be implemented and that it is not intended to limit the scope, the application or the configuration of the herein-described systems and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

**Reference sign list**

| 1 | process data component |
| 2, 2b | quantum processing unit |
| 2a | hybrid component |
| 3 | feedback component |
| 3a | front-end sub-component |
| 3b | back-end sub-component |
| 4 | quantum web service component |
| 5 | QUBO construction component |
| 6 | database component |

**Claims**

1. A data processing system for optimizing a live data-producing process, wherein the data processing system comprises:

   - a process data component (1) for providing the process data representing the live data-producing process,
   - a quantum web service component (4) for generating an optimization problem to be solved by a quantum processing unit (2, 2b), wherein the quantum web service component (4) is linked to the process data component (1) for receiving the process data therefrom, wherein the optimization problem is configured for optimizing the live data-producing process based on the process data received from the process data component (1), and
   - a feedback component (3) for feeding the solution of the optimization problem solved by the quantum processing unit (2, 2b) back to the live data-producing process, wherein the feedback component (3) is linked to the quantum web service component (4) for receiving the solution of the optimization problem solved by the quantum processing unit (2, 2b).

2. Data processing system according to claim 1, wherein the quantum web service component (4) comprises a QUBO construction component (5) for generating the optimization problem as a quadratic unconstrained binary optimization problem.

3. Data processing system according to claim 1 or 2, wherein the quantum web service component (4) comprises a database component (6) for recording data from the process data component (1), the feedback component (3) and/or the QUBO construction component (5).

4. Data processing system according to any of claims 1 to 3, wherein the feedback component (3) comprises a monitoring component for monitoring the solution of the optimization problem fed back to the live data-producing process based on the data recorded in the database component (6).

5. Data processing system according to any of claims 2 to 4, wherein the quantum web service component (4), the feedback component (3) and the QUBO construction component (5) are integrated into a single container.

6. Data processing system according to any of the previous claims, wherein the quantum web service component (4) comprises a hybrid component (2a) for solving the optimization problem together with the quantum computer (2, 2b).

7. Data processing system according to any of the previous claims, wherein the quantum web service component (4) and the feedback component (3) are configured as interchangeable modules.

8. Data processing system according to any of the previous claims, wherein the quantum web service component (4), the process data component (1) and/or the feedback component (3) are configured for being executed on at least one classical computer.

9. Data processing system according to any of the previous claims, wherein the data processing system comprises at least one classical computer for executing the components (1, 2a, 3, 4, 5, 6) of the data processing system.

10. Data processing system according to any of the previous claims, wherein the data processing system comprises the quantum processing unit (2, 2b) for solving the optimization problem generated by the quantum web service component (4).

11. Data processing system according to any of the previous claims, wherein the data processing system is at least partially cloud-based.

12. Data processing system according to any of the previous claims, wherein one or more apparatuses provide the process data component (1) and/or the feedback component (3).

13. Data processing system according to claim 12, wherein the one or more apparatuses are vehicles or one or more devices included in the one or more vehicles.

14. Method for optimizing a live data-producing process by means of the data processing system according to any of the previous claims, the method comprising:

   - providing the process data representing the live data-producing process,
   - generating the optimization problem to be solved by the quantum processing unit (2, 2b) based on the provided process data,
   - solving the optimization problem by means of the quantum processing unit (2, 2b), and
   - feeding the solution of the optimization problem solved by the quantum processing unit (2, 2b) back to the live data-producing process for optimization thereof.

15. Method according to claim 14, wherein the live data-producing process is a traffic navigation process of a fleet of vehicles.

Fig. 1

Fig. 2

Fig. 3

Fig. 4

Fig. 5

Europäisches
Patentamt

European
Patent Office

Office européen
des brevets

# EUROPEAN SEARCH REPORT

**Application Number**

EP 20 21 2619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/164418 A1 (NEUKART FLORIAN [US] ET AL) 30 May 2019 (2019-05-30)<br>* figures 1, 5, 6 *<br>* paragraph [0039] - paragraph [0053] *<br>----- | 1-15 | INV.<br>G06N10/00<br>G06Q10/04<br>G01C21/34<br>G08G1/01 |
|  |  |  | TECHNICAL FIELDS SEARCHED (IPC) |
|  |  |  | G06N<br>G06Q<br>G01C<br>G08G |

The present search report has been drawn up for all claims

| Place of search | Date of completion of the search | Examiner |
|---|---|---|
| The Hague | 11 May 2021 | Bohn, Patrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 2619

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2021

| Patent document cited in search report | | Publication date | Patent family member(s) | | Publication date |
|---|---|---|---|---|---|
| US 2019164418 | A1 | 30-05-2019 | CN | 111566709 A | 21-08-2020 |
| | | | EP | 3718096 A1 | 07-10-2020 |
| | | | US | 2019164418 A1 | 30-05-2019 |
| | | | WO | 2019105971 A1 | 06-06-2019 |

EPO FORM P0459

For more details about this annex : see Official Journal of the European Patent Office, No. 12/82